# EUROPEAN PATENT APPLICATION

(11) **EP 1 445 445 A2**
(43) Date of publication of application: **11.08.2004**
(21) Application number: 04398001.0
(22) Date of filing: 29.01.2004
(51) Int. Cl.: F02B 19/02, F02B 19/12, F02B 19/10

(54) **Internal combustion engine with a mixture chamber**

(30) Priority: 30.01.2003 PT 10290103
(71) Applicant: Oliveira, Pedro Vitor Madeira Amado, 2775-578 Carcavelos (PT)
(72) Inventor: Oliveira, Pedro Vitor Madeira Amado, 2775-578 Carcavelos (PT)

(57) **Abstract**

The engine with mixture chamber belongs to the class of internal combustion engines and shares their field of application.

The engine has a mixture chamber (1), cyclically pressurized, where the combustible mixture is made, that is fed with air under pressure and fuel originating from independent systems.

Located between the mixture chamber (1) and the combustion chamber (2), there is a valve with special characteristics ( blow valve) (11) that will control the inflow of the combustible mixture to the combustion chamber (2). The blow valve (11) opens moments before the piston reaches top dead center, blowing the pressurized combustible mixture that is in the mixture chamber (1), into the combustion chamber and closing just before the mixture is ignited. In this way it is possible to idealize a functioning cycle where combustion is obtained once in each cycle or revolution of the crankshaft.

## Description

### Technical field

The engine with a mixture chamber relates to the class of internal combustion engines that include classical engines, namely those with the Otto cycle, diesel and Wankel engines.

The field of application of this engine is wide, coinciding with the field of application of the classical internal combustion engines that, as is known, constitute nowadays the main means of powering vehicles in the automotive industry.

### State of the art

The current state of the art includes conventional internal combustion engines, namely the engines with the Otto cycle of 4 strokes, the diesel engines and the rotary engines (Wankel type).

In the current internal combustion engines, it is the engine piston itself that draws in the air or air / fuel mixture, and effects its compression up to a compression rate that is one of the characteristics of the engine. We therefore can say that in the cycle of these engines there is a compression cycle, where the piston effects work on the air or air / fuel mixture.

The current classical internal combustion engines, present some limitations among which some are referred: the quantity of air or air / fuel mixture is limited by the actual volume dimension of the engine itself; the maximum compression pressure that the air or air / fuel mixture can be compressed to is the standard compression rate that is defined for the engine, not being possible to be made to vary for different demands, or type of work that the engine is desired to perform; the compression of the air or air / fuel mixture is made on the combustion chamber where immediately before took place the combustion and as so is at a very high temperature and also has residual burnt exhaust gases that will be mixed with the intake of air or air / fuel mixture.

A particular analysis of the said state of the art for a case of a single cylinder engine with 4 cycles ( intake, compression, combustion, exhaust) that is characterized by the fact that in its complete cycle the piston makes four strokes (what is equivalent to two complete revolutions of the crankshaft), and here one complete revolution of the crankshaft, is spent with the intake and compression of the air or air / fuel mixture, therefore the combustion or power stroke only takes place once per every two revolutions of the crankshaft. In the case of this new engine, the intake and compression of the air or air / fuel mixture is made by a compressor. It therefore avoids that the compression work be made by the engine piston, and so it enables that the intake of the pressurized combustible mixture be made at the final stages of the exhaust stroke and so it is obtained one combustion per each revolution of the crankshaft (in the case of single cylinder engines), therefore altering the cycle of the engine by eliminating the compression work carried out by the engine piston.

In the course of the last decades, the engine fuel systems have progressed form the classic carburetor to fuel injection either on the intake manifold or directly on the combustion chamber, being that the control of the injection in measured quantities is now a reality. For this new engine, the air is compressed by a compressor and is fed under pressure to a mixture chamber, where it is mixed with the fuel (also injected under controlled pressure and quantity). It is this mixture chamber cyclically pressurized that will feed the engine combustion chamber. The intake of the combustion chamber is therefore achieved through a mixture chamber.

One other difference to the current state of the art is that the pressure in the combustion chamber can be made to vary in a controlled way through a wide range of pressures. Therefore the pressure in the combustion chamber can be made to vary contrary to what happens in current engines where the pressure in the combustion chamber after the air intake is always mostly determined by the compression rate of the engine. It is therefore possible to make the engine flexible in terms of responding to the desired work or performance conditions.

It can be concluded therefore that the utilization of a pressurized mixture chamber to feed the combustion chamber, together with all the controlled conditions in its interior, do constitute one of the major developments of this new type of engine in relation to the current state of the art.

### Description of drawings

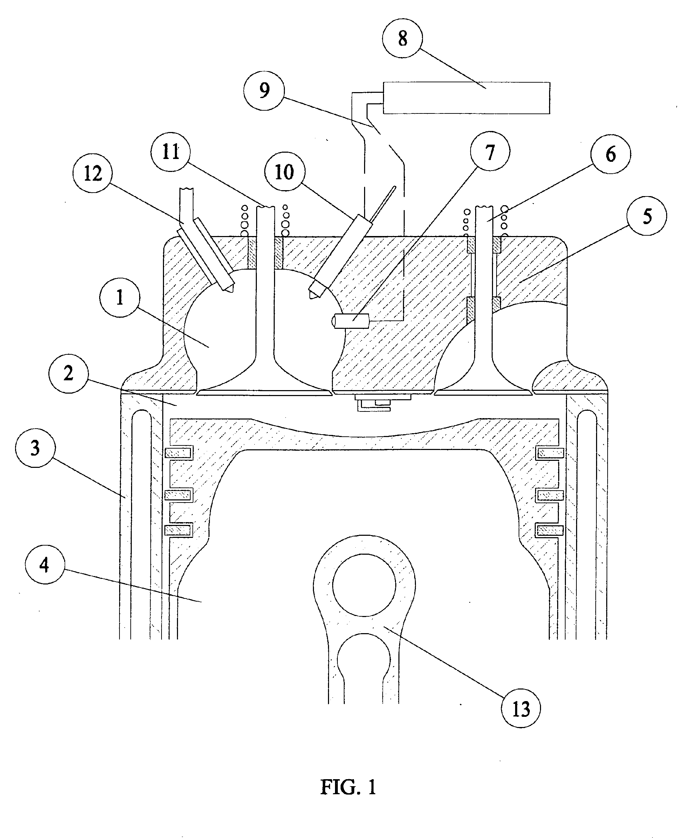

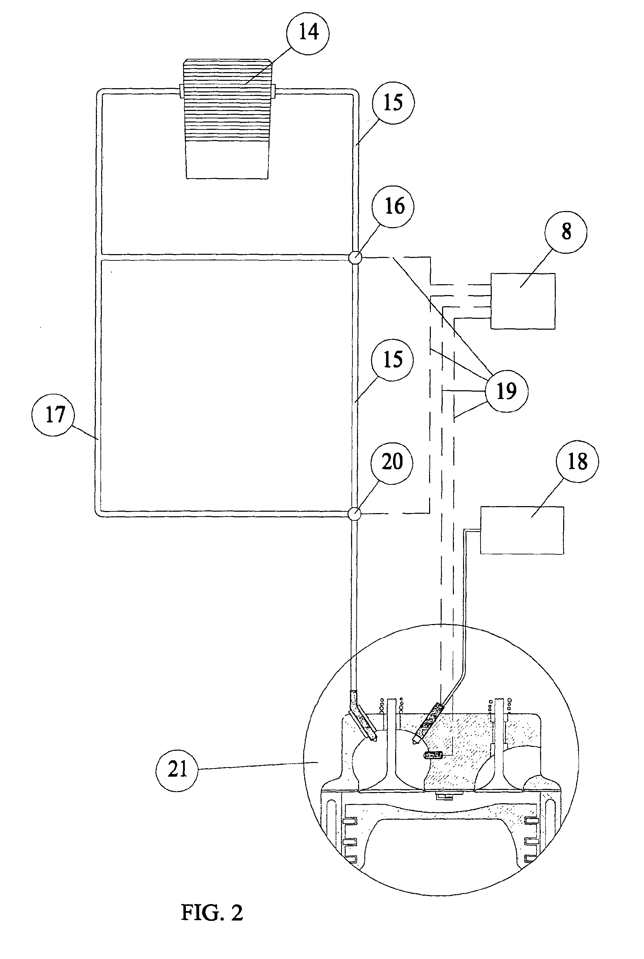

Fig. 1 - Drawing showing the detail of the engine cylinder head:
   This drawing shows the detail of the engine cylinder head, it can clearly be seen the representations of the mixture chamber, the compressed air and fuel injector nozzles or valves, the control sensors for the conditions within the mixture chamber, the blow valve ( here represented as a typical conventional engine valve ), and of the engine combustion chamber and piston.
   The index for the elements represented in the figure is as follows:
      1 - Mixture chamber
      2 - Combustion chamber
      3 - Engine block
      4 - Piston
      5 - Cylinder head
      6 - Exhaust valve
      7 - Pressure sensor
      8 - Electronic control unit
      9 - Electrical connections
      10 - Fuel injector
      11 - Blow valve
      12 - Air injector nozzle or valve ( with no return valve )
      13 - Piston rod
Fig. 2 - General representation of the system including the compressor and engine with mixture chamber:
   This drawing presents in diagrammatic form the system of an engine with mixture chamber where the air is compressed by an external compressor. This representation is only an example and aims at providing a global view of system for the engine here described.
   In this drawing there are represented, the compressed air system, the fuel injection system, the control conditions in the mixture chamber and respective electronic control unit, and the cylinder head ( the detail is shown in figure 1 ).
   The index for the elements represented in the figure is as follows:
      8 - Electronic control unit for the engine and mixture chamber
      14 - Air compressor
      15 - Compressed air ducts
      16 - Pressure regulating valve
      17 - Compressed air return or exhaust duct
      18 - Fuel pressure pump and control unit
      19 - Electrical connections
      20 - Acceleration / deceleration control valve
      21 - Cylinder head

Both figures only pretend to represent an example of the engine with mixture chamber, based on the conventional Otto cycle combustion engine. Other configurations and representations are possible.

### Description of the functioning of the invention

This new type of engine, in a similar way to the current internal combustion engines at 2 or 4 strokes, can present several numbers of cylinders.

The engine with mixture chamber can be built from new or can be obtained by the transformation of current internal combustion engines. As its principle of functioning is compatible with current classical internal combustion engines, these can be adapted with a modified cylinder head comprising a mixture chamber, the respective components, the compressed air and fuel systems, their controls and actuators. It is obvious that these transformations will be more or less practical depending on the engine type and the degree of transformation needed.

The functioning basis of an engine with mixture chamber is the possibility of controlling the air fuel mixture and its pressure in the mixture chamber in function of the performance or type of utilization that the engine will be required to perform, as well as the feeding of this pressurized combustible mixture into the combustion chamber. It is concluded therefore that a mixture chamber is a fundamental and distintictive characteristic of these types of engines.

To start an engine with mixture chamber, it is required that both the engine and compressor be actuated by an adequate starter motor. At this start stage the pressure of the air that is fed to the mixture chamber is reduced, permitting the reduction of the pressure in the combustion chamber and therefore making starting easier.

It now follows a brief description of the functioning of this invention. The description is based the engine and compressor system presented in figure 2, and aims at being a simple and resumed form of possible functioning of this invention.

The timing for opening and closing of the blow and exhaust valves, is described considering a two stroke cycle, in an engine with mixture chamber that was devised from the transformation of a Otto conventional internal combustion engine at four stroke cycle.

Once the engine start is achieved, the cycle of functioning can be described as follows:

The compressor (14) compresses the air. The compressed air is then fed through the ducts (15) and passes through the pressure regulating valve (16) where its pressure is adjusted to the basic pressure value (nominal functioning pressure of the system). The compressed air then passes through the acceleration I deceleration control valve (20) that can alter its pressure to the desired pressure for the performance requested of the engine. Once the final air pressure is obtained, the compressed air passes through an injector nozzle or non-return valve into the mixture chamber, (1) where once mixed with the injected fuel it forms the combustible pressurized mixture.

The fuel quantity and pressure of injection is controlled by the electronic control unit that controls the engine and mixture chamber, and its system includes the fuel pump and pressure regulator (18) as well as the fuel injector (10).

On the compressed air system there exist exhaust ducts that provide the exhaust of the excess air that is redirected to the intake of the compressor. As depicted in figure two, these excess air ducts are located on the initial compressor pressure regulating valve as well as on the acceleration and deceleration valve.

A valve can exist on the mixture chamber to avoid overpressures. Also to avoid negative pressures in the combustion chamber, a special valve can be installed or the exhaust valve can be calibrated so that it slightly opens when negative pressures are generated in the combustion chamber.

Once the mixture is obtained, it is maintained under pressure in the mixture chamber. It should be noted that the pressure of the mixture in the interior of the mixture chamber can be maintained, once the valves for the fuel and compressed air are of the non-return type.

When the engine is in its cycle, and the piston is in the exhaust stroke near reaching its top dead center, the blow valve (11) opens and the compressed air I fuel mixture stored under pressure in the mixture chamber is fed into the combustion chamber. At this point the exhaust valve is at the final stage of closing and the blowing of the compressed mixture, due to the opening of the blow valve will facilitate the full exhaust of the burnt gases. The opening and closing of the blow valve, is very quick and its aperture is minimal during the final stages of the exhaust stroke and just before the piston reaches top dead center. The timing for the closing of the exhaust valve can be advanced to facilitate the process.

Once the inflow of the pressurized air / fuel mixture into the combustion chamber is completed, and with both blow and exhaust valves closed, ignition of the combustible mixture takes place. The piston is then pushed downwards and when it reaches the bottom dead center, the exhaust valve opens and the exhaust of the burnt gases takes place during the exhaust stroke. The exhaust valve will close in synchronization with the blow valve as described previously. The start of a new cycle is then reached with the opening of the blow valve and the inflow into the combustion chamber of the combustible mixture.

This engine works therefore only with two strokes (exhaust and combustion), being the intake of the pressurized combustible mixture, done at the final moments of the exhaust stroke. It is possible that the piston does some compression work on the mixture at the very end of its movement of the exhaust stroke, but it is not deemed that this compression work is of significance.

The pressure at which the air is compressed by the compressor, can be controlled either by direct actuation on the compressor, (what by itself does not dispense the pressure regulating valve to correct pressure fluctuations), or by actuation of the pressure regulating valve, in this case the compressor debit can be mostly constant. Whatever the solution utilized, it is the pressure regulating valve that will define the basic working pressure of the system that can vary in accordance with the utilization that the engine with mixture chamber will be subject to.

The electronic control unit (8) that manages the mixture chamber performs a key role for the correct functioning of the engine, once it captures through sensors the conditions within the mixture chamber, namely the pressure, the pressure variations, the temperature, ... and also establishes contact with the engine electronic control unit that is used to capture information such as the engine RPM, ignition timing, coolant temperature, ... and by managing the data, controls the fuel and air systems pressure, and can also control the timing for the injection of both fuel and compressed air into the mixture chamber, and can also control the timing for the opening and closing of the blow and exhaust valves. The electronic control unit for the mixture chamber can be integrated within the engine electronic control unit. As represented in figure 2 these units are integrated in one only unit and are referenced by the number 8.

### Some advantages associated with this invention

The following are some of the advantages from the utilization of this invention.

One of the main advantages lies with the possibility of the engine having a working cycle in which combustion occurs once per each revolution of the crankshaft (this for the case of single cylinder engine), what on a theoretical basis can represent a power delivery that is double when compared with current sate of the art internal combustion engines with a 4 stroke cycle where a power stroke takes place only once every two revolutions. This way it is possible to reduce engine sizes and weight, the number of cylinders, as well as the fuel consumption and the respective emission of pollutants, whilst maintaining the performances of current engines.

The possibility of varying the nominal pressure of the air supply to the combustion chamber can for example facilitate starting, and in this way the utilization of starter motors with less power output then the current ones becomes a reality.

Once the engine starts, it is possible to regulate the air pressure in the mixture chamber for values that permit higher engine performances, and inclusively regulate the performance of the engine to the type of utilization required, what will render a better management of the engine output, its energy consumption, and emission of pollutants to the atmosphere.

The utilization of a separate compressor and of pressure regulating valves renders a capability of very fine air pressure regulation, what permits the engine to work at any regime, with the air pressure and fuel mixture in the combustion chamber at values very close to the ones of ideal performance.

The possibility of varying the air pressure at the compressor will permit a wide range of pressures in the combustion chamber what enables a wider range of power to be obtained from a same engine size.

## Claims

1. A internal combustion engine with a mixture chamber (1) that is fed with pressurized air and fuel from independent systems, with a electronic control unit (8) for management of the conditions within the mixture chamber functioning in conjunction with the electronic control unit for the management of classical engines, **characterized in that** the mixture of the compressed air and fuel (combustible mixture) is done in a special pressurized chamber called mixture chamber (1), having one valve (blow valve) (11), that when open allows the combustible mixture to be fed into the combustion chamber (2) of the engine.

2. A internal combustion engine with a mixture chamber, as claimed in claim 1, where the compression of the air that feeds the mixture chamber is done by a compressor (14) **characterized in that** into the mixture chamber are fed periodically, and under pressure air and fuel form different sources.

3. An internal combustion engine with a mixture chamber, as claimed in the previous claims, **characterized in that** the mixture chamber (1) feeds the combustion chamber (2) with the compressed combustible mixture, through a special valve (blow valve) (11) that is periodically actuated.

4. An internal combustion engine with mixture chamber, as claimed in the previous claims, **characterized by** having nozzles or injectors (10, 12) that permit the combustible mixture to maintain within the mixture chamber, its adequate pressure until the opening of the blow valve.

5. An internal combustion engine with mixture chamber (1), as claimed in the previous claims, **characterized by** having a special valve that will permit the admission of air into the combustion chamber (2) to avoid negative pressures to be generated within the engine cylinder.
5.1- An internal combustion engine with mixture chamber, as claimed in claim 5 **characterized in that** the exhaust valve (6) can be calibrated so that it will permit the admission of exhaust gases into the combustion chamber to avoid negative pressures to be generated within the engine cylinder.

6. An internal combustion engine with a mixture chamber, as claimed in the previous claims, **characterized in that** the opening of the blow valve (11) is made before the combustion of the combustible mixture and its opening can take place just before the full closing of the exhaust valve (6) facilitating the total exhaust of burnt gases.

7. An internal combustion engine with a mixture chamber, as claimed in the previous claims, **characterized in that** the closing of the blow valve (11) takes place before the combustion of the combustible mixture and before the piston (4) reaches top dead center.

8. An internal combustion engine with a mixture chamber, as claimed in previous claims, **characterized in that** the actual aperture of the blow valve (11) takes place during a very short time before top dead center.

9. An internal combustion engine with a mixture chamber, as claimed in previous claims, **characterized in that** the timing for the closure of the exhaust valve (6) can be slightly advanced.

10. An internal combustion engine with a mixture chamber, as claimed in previous claims, **characterized by** having the possibility for different pressures to be set in the air supply system (nominal pressure) in function of the type of utilization required of the engine, using for such pressure regulating valves (16, 20 ).

11. An internal combustion engine with a mixture chamber, as claimed in previous claims, **characterized in that** a electronic control unit (8) manages the conditions within the mixture chamber by capturing through sensors the necessary information it needs for the management process, information such as, the pressure within the mixture chamber, the quantity and pressure of the fuel injected, the timing for the opening and closing of the blow valve, the temperature in the mixture chamber, thus managing the timing cycles for the pressurized air and fuel injection into the mixture chamber, the pressure control within the chamber, and the definition of the starting parameters (start cycle).

12. An internal combustion engine with a mixture chamber, as claimed in previous claims, **characterized in that** the pressure of the combustible mixture fed into the combustion chamber (1) through the blow valve (11), is subjected to an additional slight increase in pressure within the combustion chamber (2) due to the upward movement of the piston (4) and when the blow valve (11) closes before the piston (4) reached top dead center.
